# EUROPÄISCHE PATENTSCHRIFT

(11) **EP 2 213 958 B1**
(45) Veröffentlichungstag und Bekanntmachung des Hinweises auf die Patenterteilung: **01.11.2017**
(21) Anmeldenummer: 10000454.8
(22) Anmeldetag: 19.01.2010
(51) Int. Cl.: F24H 1/43, F24H 8/00

(54) **Brennwert-Wärmetauscher für Brauchwassererwärmung**
Calorific heat exchanger for heating service water
Echangeur de chaleur à valeur énergétique pour le chauffage de l'eau non potable

(30) Priorität: 28.01.2009 AT 1402009
(43) Veröffentlichungstag der Anmeldung: 04.08.2010
(73) Patentinhaber: Vaillant GmbH, 42859 Remscheid (DE)
(72) Erfinder: Hertgers, Christiaan, 7218 MD Almen (NL)
(74) Vertreter: Hocker, Thomas

(56) Entgegenhaltungen:
- EP-A2- 1 884 722
- DE-A1- 3 307 330

## Beschreibung

Die Erfindung bezieht sich auf eine Wärmezelle mit einem Wärmetauscher, vorzugsweise für Brennwert-Heizgeräte.

Bei Heizgeräten mit Brennwertnutzung werden die Abgase (vorwiegend Kohlendioxid, Wasserdampf, Stickstoff und Sauerstoff) eines brennstoffbeheizten Brenners derart weit abgekühlt, dass der entstehende Wasserdampf auskondensiert. Unterschreitet das Abgas eine Temperatur von ca. 55°C, so wird bei einer typischen Feuchte von ca. 105 g Wasserdampf pro kg trockenes Abgas der Taupunkt des Abgases unterschritten. Je niedriger die Abgastemperatur ist, desto mehr Wasserdampf kondensiert. Dieses Kondensat, das je nach Betriebsbedingungen eine Temperatur von etwa 30 bis 55°C besitzt, wird gemäß dem Stand der Technik über einen Siphon abgeführt ohne weiter energetisch genutzt zu werden.

DE 33 07 330 A1 zeigt einen Kondensationsheizkessel, bei dem im unteren Bereich eines Gehäuses Kondensat angesammelt wird und die Abgase des Brenners durch dieses Kondensat geleitet wird. Im Kondensat befindet sich ein spiralförmiger Wärmetauscher zur Nutzung thermischer Energie des Kondensats. Über die gesamte Querschnittsfläche wird Kondensat gesammelt, so dass es im Betrieb zu einer nennenswerten Abkühlung des Kondensats über die Außenwände kommt.

EP 1884722 A2 zeigt einen Behälter zur Neutralisation von Kondensat, ion dem sich auch ein Wärmetauscher zur Nutzung thermischer Energie des Kondensats befindet.

Aufgabe der vorliegenden Erfindung ist es daher, eine Wärmezelle mit einem Wärmetauscher, vorzugsweise für Brennwert-Heizgeräte, zu schaffen, die eine weitere energetische Nutzung des Kondensats ermöglicht.

Erfindungsgemäß wird dies gemäß den Merkmalen des unabhängigen Patentanspruchs dadurch gelöst, dass das Kondensat in dem Gehäuse der Wärmezelle gesammelt wird und der Wärmetauscher teilweise innerhalb dieses angestauten Kondensats verläuft.

Hierdurch kann thermische Energie von dem Kondensat, das - je nach Betriebszustand - eine Temperatur bis zu 55°C aufweist auf Heizungs- oder Brauchwasser übertragen werden. Brauchwasser strömt - je nach Jahreszeit - mit einer Temperatur von 5 bis etwa 20°C in ein Heizungsgerät ein, so dass eine Temperaturdifferenz zwischen Kondensat und Brauchwasser von bis zu 50 K zur Verfügung steht. Im Gehäuse sind - vorzugsweise bis zur Höhe des Eintritts in den Kondensatablauf - ein oder mehrere Verdrängungskörper angeordnet. Demzufolge muss im Gehäuse bis zum Eintritt in den Kondensatablauf nur eine reduzierte Kondensatmenge angesammelt werden. Hierdurch wird die für die Verdunstung relevante Oberfläche reduziert und bei einem Abfallen des Kondensatspiegels ist die Sollhöhe wieder schneller erreicht. Für die Erwärmung des Brauchwassers ist lediglich von Relevanz, dass der entsprechende Bereich des Wärmetauschers von Kondensat umgeben ist.

Gemäß den Merkmalen des abhängigen Verfahrensanspruchs 2 besteht der Wärmetauscher zumindest teilweise aus einem wendelförmigen Rohr, das vorzugsweise mit senkrechter Mittelachse im Gehäuse angeordnet ist. Eine derartige Bauform eignet sich besonders gut für eine gute Energienutzung, insbesondere dann, wenn der Brenner innerhalb des wendelförmigen Rohres angeordnet ist.

Gemäß den Merkmalen des abhängigen Verfahrensanspruchs 3 besteht der Wärmetauscher zumindest teilweise aus einem zylindrischen Mantel, der vorzugsweise mit senkrechter Mittelachse um das Gehäuse angeordnet ist. In diesem Fall wird eine Brennkammerwand zugleich als Wärmetauscherfläche verwendet.

Ragt der Kondensatablauf, wie in Anspruch 4 geschützt, über ein Rohr in das Gehäuse, so kann über die Länge des Rohres das aufgestaute Kondensatvolumen definiert werden.

Wenn der Wärmetauscher, wie in Anspruch 5 geschützt, über einen Eingang unterhalb des Eintritts in den Kondensatablauf verfügt und dieser Eingang mit einer Brauchwassereingangsleitung verbunden wird, so kann Brauchwasser einfach mittels Kondensat aufgeheizt werden.

Die Erfindung wird anhand der Figuren erläutert. Hierbei zeigen:
- Figur 1: die Basis für eine erfindungsgemäßen Wärmezelle und
- Figur 2: eine andere Basis einer erfindungsgemäßen Wärmezelle.
- Figur 3: eine erfindungsgemäße Wärmezelle sowie
- Figur 4: eine Alternative hierzu, für die keinen Schutz beansprucht wird.

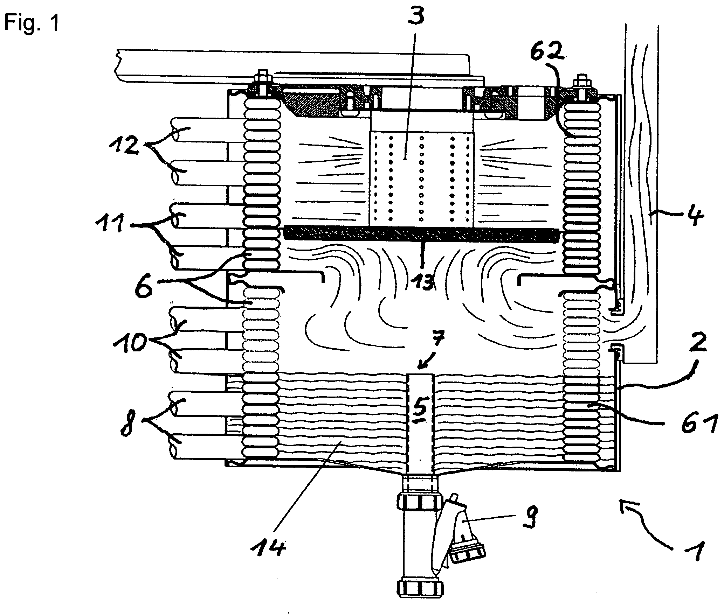

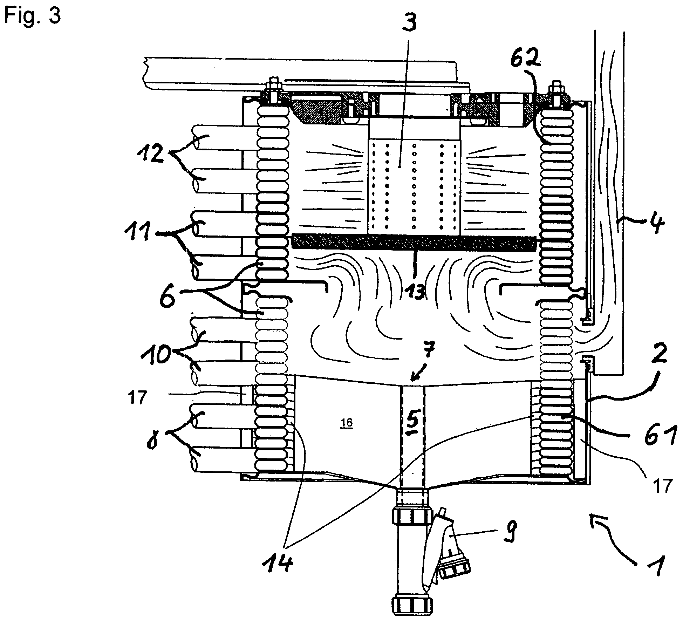

Figur 1 zeigt eine Wärmezelle 1 eines nicht detaillierter dargestellten Heizgeräts mit einem zylindrischen Gehäuse 2 mit senkrechter Mittelachse ohne das erfindungswesentliche Merkmal, welches in Figur 3 dargestellt ist. Oben ist zentral ein brennstoffbeheizter Brenner 3 angeordnet. Um diesen herum ist koaxial ein Wärmetauscher 6 angeordnet. Der Wärmetauscher 6 besteht aus zwei übereinander angeordneten, wendelförmigen Wärmetauschern 61, 62 zur Wärmeübertragung der thermischen Energie der Abgase des Brenners 3 auf Brauch- und Heizungswasser der Heizung. Unten im zylindrischen Gehäuse 2 ist zentral ein Kondensatablauf 5 angeordnet, dessen Eintritt 7 über ein Rohr in das Gehäuse 2 ragt, wobei der Eintritt in einem Abstand a oberhalb des tiefsten Punktes des Gehäuses 2 angeordnet ist. Der Kondensatablauf 5 mündet in einen Siphon 9. Das Gehäuse verfügt ferner über eine Öffnung zum Anschluss eines Abgasrohranschlusses 4. Der wendelförmige Wärmetauscher 62 ist im oberen Bereich des Gehäuses 2 um den Brenner 3 angeordnet. Der Eingang 11 des Wärmetauschers 62 ist mit dem Rücklauf der Heizung verbunden; der Ausgang 12 des Wärmetauschers 62 mit dem Vorlauf. Der wendelförmige Wärmetauscher 61 ist unterhalb des Wärmetauschers 62 angeordnet und über den Eingang 8 mit einem Kaltwasserzulauf verbunden. Der Ausgang 10 des Wärmetauschers 61 ist mit einem nicht näher dargestellten Brauchwasserspeicher oder einem Sekundärwärmetauscher zur Brauchwasserbereitung verbunden. Unterhalb des Brenners ist horizontal eine Trennwand 13 angeordnet.

Im Betrieb wird an der Oberfläche des Brenners 3 ein Brenngas-Luft-Gemisch verbrannt. Die dabei entstehenden Abgase, vorwiegend Kohlenmonoxid, Wasserdampf und Restluft, durchströmen den oberen Wärmetauscher 62 des Wärmetauschers 6 radial nach außen und werden dabei durch Wärmeabgabe an den Heizungskreislauf der Heizung abgekühlt. Anschließend strömen die Abgase unterhalb der Trennwand 13 von außen nach innen und werden weiter abgekühlt. Hierbei unterschreitet das Abgas den Taupunkt (ca. 55°C), wodurch Kondensat entsteht, das im zylindrischen Gehäuse 2 nach unten fließt. Dort wird das Kondensat im Gehäuse 2 gesammelt, wodurch der Kondensatspiegel steigt, bis sich Kondensat 14 im Gehäuse 2 bis zur Höhe des Eintritts 7 in den Kondensatablauf 5 ansammelt.

Strömt kaltes Brauchwasser durch den Eingang 8 in den unteren Bereich des unteren Wärmetauschers 61 ein, so wird das Brauchwasser durch das warme Kondensat 14 vorgewärmt. Im oberen Bereich des unteren Wärmetauschers 61 wird das Brauchwasser durch das bereits im Wärmetauscher 62 abgekühlte Abgas des Brenners 3 weiter erwärmt, wodurch das Abgas weiter abgekühlt wird und weiteres Kondensat entsteht. Überschreitet der Kondensatspiegel die Höhe a, so fließt Kondensat durch den Kondensatablauf 5 und den Siphon 9. Der Siphon 9 verhindert, dass Abgas durch den Kondensatablauf 5 entweichen kann. Das abgekühlte Abgas entweicht schließlich über den Abgasrohranschluss 4.

Da das Brauchwasser, welches durch den Ausgang 10 des unteren Wärmetauschers 61 fließt kälter als die übliche Brauchwassertemperatur ist, muss das Brauchwasser in einem nicht näher dargestellten Brauchwasserspeicher oder einem Sekundärwärmetauscher zur Brauchwasserbereitung weiter erhitzt werden.

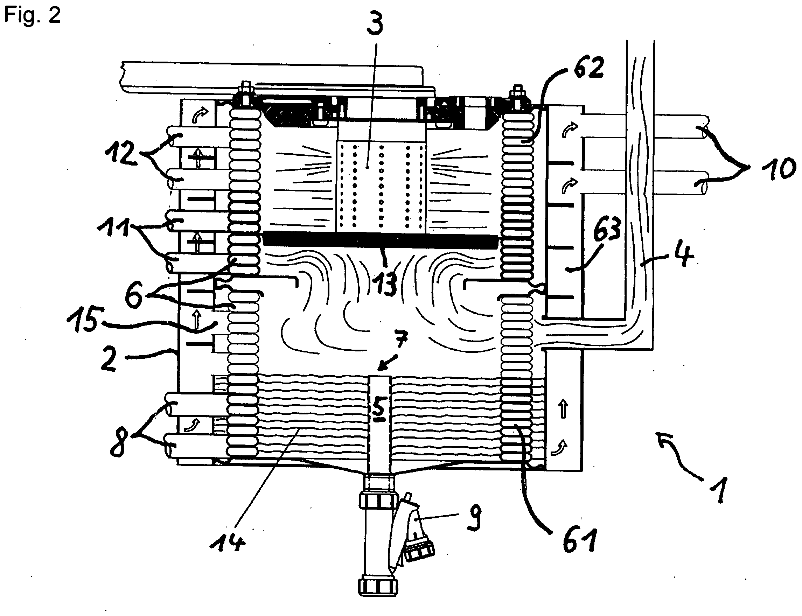

Figur 2 zeigt eine andere Ausgestaltung der erfindungsgemäßen Wärmezelle ebenfalls ohne das erfindungswesentliche Merkmal. Das Gehäuse 2 verfügt hierbei zusätzlich über einen Wassermantel, der als Wärmetauscher 63 fungiert. Wie bei Figur 1 strömt durch den Eingang des Wärmetauschers 61 kaltes Brauchwasser ein. Ein Übergang 15 sorgt dafür, dass im Wärmetauscher 61 erwärmtes Brauchwasser in den Wärmetauscher 63 übergeleitet wird. Dort kann das Brauchwasser weitere Wärme des Abgases aufnehmen, ehe das erwärmte Brauchwasser über den Ausgang 10 wieder zu einem Brauchwasserspeicher oder einem Sekundärwärmetauscher zur Brauchwasserbereitung weitergeleitet wird. Da das Brauchwasser hierbei auch Wärme mit dem Abgas nach der erstmaligen radialen Durchströmung des oberen Wärmetauschers 62 austauscht, wird das Brauchwasser weiter erhitzt als bei der erfindungsgemäßen Variante nach Figur 1.

Figur 3 zeigt die erfindungsgemäße Variante, bei der im Gehäuse 2 zwei Verdrängungskörper 16, 17 angeordnet sind. Der innere Verdrängungskörper 16 umschließt den Kondensatablauf 5 rotationssymmetrisch und schließt unten mit dem Boden des Gehäuses 2 ab. Oben verfügt der Verdrängungskörper 16 über einen konischen Verlauf, der zugleich als Eintritt 7 in den Kondensatablauf 5 dient. Der äußere Verdrängungskörper 17 füllt einen Teil des Raums zwischen dem Wärmetauscher 61 und der Wand des Gehäuses 2 aus. Kondensat 14 sammelt sich somit nur im verbleibenden Freiraum an. Hierdurch wird die für die Verdunstung von Kondensat 14 relevante Oberfläche reduziert und bei einem Abfallen des Kondensatspiegels ist die Sollhöhe (bis zum Eintritt 7) wieder schneller erreicht. Für die Erwärmung des Brauchwassers ist lediglich von Relevanz, dass der entsprechende Bereich des Wärmetauschers 61 von Kondensat 14 umgeben ist.

Die Verdrängungskörper 16, 17 können auch über den Eintritt 7 in den Kondensatablauf 5 nach oben hinausragen. Dann ist beim inneren Verdrängungskörper 16 jedoch darauf zu achten, dass ein Abfluss in den Kondensatablauf 5 zum Beispiel über einen Leitung oder einen Schlitz gewährleistet ist.

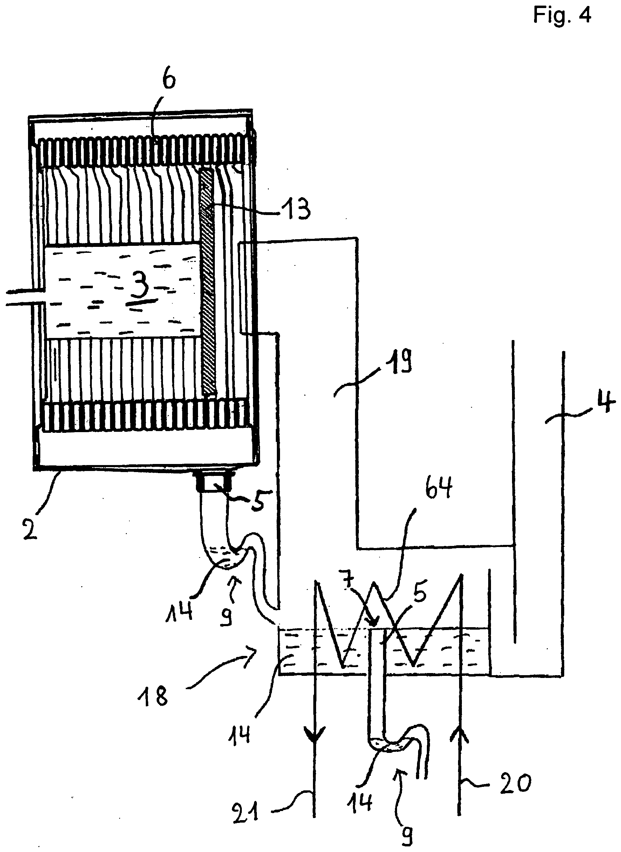

Figur 4 zeigt eine nicht erfindungsgemäße Alternative mit zwei Wärmetauschern 6, 64 in zwei Gehäusen 2, 18. Die Abgase des Brenners 3 werden zunächst im koaxial um den Brenner 3 angeordneten Wärmetauscher 6 von Heizungswasser eines nicht detaillierter dargestellten Heizkreislaufs abgekühlt. Das Abgas kann dabei minimal auf die Rücklauftemperatur des Heizungskreislaufs abgekühlt werden. Kondensat 14 fließt über den Kondensatablauf 5 des ersten Gehäuses 2 in einen ersten Siphon 9. Die abgekühlten Abgase strömen über eine Abgasführung 19 in ein Nachwärmetauscher-Gehäuse 18, in dem sich ein Nachwärmetauscher 64 befindet. Der erste Siphon 9 des ersten Gehäuses 2 ist mit dem Nachwärmetauscher-Gehäuse 18 verbunden, so dass Kondensat aus dem ersten Siphon 9 des ersten Gehäuses 2 in das Nachwärmetauscher-Gehäuse 18 fließen kann. Der Nachwärmetauscher 64 ist auf der einen Seite mit einem Brauchwasserzulauf 20 und auf der anderen Seite mit einer Brauchwasserleitung 21 verbunden. Von unten ragt ein Kondensatablauf 5 in das Nachwärmetauscher-Gehäuse 18 hinein, so dass sich Kondensat 14 im unteren Bereich sammelt. Der Nachwärmetauscher 64 befindet sich teilweise im und teilweise außerhalb des Kondensats 14. Dem Nachwärmetauscher-Gehäuse 18 schließt sich ein Abgasrohranschluss 4 an. Das im ersten Wärmetauscher 6 abgekühlte Abgas strömt in das Nachwärmetauscher-Gehäuse 18 ein und wird von dem Nachwärmetauscher 64 von dem Brauchwasser, das durch den Brauchwasserzulauf 20 einströmt, abgekühlt. Hierbei kann das Abgas minimal auf Brauchwasserzulauftemperatur abgekühlt werden. Das Brauchwasser strömt je nach Jahreszeit mit Temperaturen bis minimal 5°C zu. Das im Nachwärmetauscher 64 erwärmte Brauchwasser strömt durch die Brauchwasserleitung 21 zu einem nicht weiter dargestellten Wärmetauscher, in dem es auf Solltemperatur erwärmt wird. Da der Nachwärmetauscher 64 sich teilweise im Kondensat 14 befindet, kann auch thermische Energie des Kondensats 14 zur Brauchwassererwärmung genutzt werden. Das Kondensat 14, das über den Eintritt 7 in den Kondensatablauf 5 des Nachwärmetauscher-Gehäuses 18 strömt, wird über einen zweiten Siphon 9 abgeführt. Durch das im Nachwärmetauscher-Gehäuse 18 befindliche Kondensat 14 ist die Atmosphäre im Nachwärmetauscher-Gehäuse 18 stets gesättigt, so dass es rasch zur weiteren Kondensation kommt.

### Bezugszeichenliste

Wärmezelle (1)
Gehäuse (2)
Brenner (3)
Abgasrohranschluss (4)
Kondensatablauf (5)
Wärmetauscher (6)
Eintritt (7)
Eingang (8)
Siphon (9)
Ausgang (10)
Eingang (11)
Ausgang (12)
Trennwand (13)
Kondensat 14
Verdrängungskörper (16)
Verdrängungskörper (17)
Nachwärmetauscher-Gehäuse 18
Abgasführung 19
Brauchwasserzulauf 20
Brauchwasserleitung 21
Wärmetauscher (61)
Wärmetauscher (62)
Wärmetauscher (63)
Nachwärmetauscher (64)

## Patentansprüche

1. Wärmezelle (1), vorzugsweise für Heizgeräte, mit einem brennstoffbeheizten Brenner (3), mindestens einem Wärmetauscher (6, 61, 62, 63, 64) zur Wärmeübertragung der thermischen Energie der Abgase des Brenners (3) auf mindestens ein liquides Medium, einen Abgasrohranschluss (4) und mindestens einen Kondensatablauf (5) mit einem Eintritt (7), wobei der oder die Wärmetauscher (6, 61, 62, 63, 64) im Falle eines Wärmetauschers (6, 61, 62, 63) in einem Gehäuse (2) und im Falle mehrerer Wärmetauscher (6, 61, 62, 63, 64) in mindestens einem Gehäuse (2, 18) angeordnet sind, wobei der Eintritt (7) in mindestens einen Kondensatablauf (5) in einem Abstand (a) oberhalb des tiefsten Punktes mindestens eines Gehäuses (2, 18) angeordnet ist und ein Teil des Wärmetauschers (6, 61, 63, 64) in oder um das Gehäuse (2, 18) unterhalb des Eintritts (7) in den Kondensatablauf (5) angeordnet ist. **dadurch gekennzeichnet, dass** im Gehäuse (2, 18) ein oder mehrere Verdrängungskörper (16, 17), welche vorzugsweise bis zur Höhe des Eintritts (7) in den Kondensatablauf (5) reichen, angeordnet sind um die Oberfläche für die Verdunstung von Kondensat zu reduzieren.

2. Wärmezelle (1) nach Anspruch 1, **dadurch gekennzeichnet, dass** der Wärmetauscher (6, 61, 62, 64) zumindest teilweise aus einem wendelförmigen Rohr besteht, das vorzugsweise mit senkrechter Mittelachse im Gehäuse (2) angeordnet ist.

3. Wärmezelle (1) nach Anspruch 1 oder 2, **dadurch gekennzeichnet, dass** der Wärmetauscher (6, 63) zumindest teilweise aus einem zylindrischen Mantel besteht, der vorzugsweise mit senkrechter Mittelachse um das Gehäuse (2) angeordnet ist.

4. Wärmezelle (1) nach einem der Ansprüche 1 bis 3, **dadurch gekennzeichnet, dass** der Kondensatablauf (5) über ein Rohr in das Gehäuse (2, 18) ragt.

5. Wärmezelle (1) nach einem der Ansprüche 1 bis 4, **dadurch gekennzeichnet, dass** der Wärmetauscher (6, 61, 63, 64) über einen Eingang (8) unterhalb des Eintritts (7) in den Kondensatablauf (5) verfügt und dieser Eingang vorzugsweise mit einer Brauchwassereingangsleitung verbunden wird.

## Claims

1. Heat cell (1), preferably for heating devices, with a fuel heated burner (3), at least one heat exchanger (6, 61, 62, 63, 64) for the heat transfer of the thermal energy of exhaust gases of the burner (3) to at least one liquid medium, an exhaust gas pipe connection (4), and at least one condensate drain (5) with an inlet (7), wherein the one or more heat exchanger (6, 61, 62, 63, 64) in the case of one heat exchanger (6, 61, 62, 63) is arranged in a housing (2) and in the case of more than one heat exchangers (6, 61, 62, 63, 64) is arranged in at least one housing (2, 18), wherein the inlet (7) into at least one condensate drain (5) is arranged with a spacing (a) above the lowest point of at least one housing (2, 18) and part of the heat exchanger (6, 61, 63, 64) is arranged in or around the housing (2, 18) below the inlet (7) into the condensate drain (5), **characterised in that** one or more displacement bodies (16, 17) are arranged in the housing (2, 18) to reduce the surface for the evaporation of condensate, the displacement bodies preferably reaching up to the height of the inlet (7) into the condensate drain (5).

2. Heat cell (1) according to claim 1, **characterised in that** the heat exchanger (6, 61, 62, 64) at least partially consists of a helical-shaped pipe which is preferably arranged with a vertical central axis in the housing (2).

3. Heat cell (1) according to claim 1 or 2, **characterised in that** the heat exchanger (6, 63) at least partially consists of a cylindrical coat which is preferably arranged with a vertical central axis around the housing (2).

4. Heat cell (1) according to any of claims 1 to 3, **characterised in that** the condensate drain (5) protrudes via a pipe into the housing (2,18).

5. Heat cell (1) according to any of claims 1 to 4, **characterised in that** the heat exchanger (6, 61, 63, 64) comprises an input (8) below the inlet (7) into the condensate drain (5) and this input is preferably connected to a service water inlet pipe.

## Revendications

1. Cellule de chaleur (1), de préférence pour des appareils de chauffage, avec un brûleur (3) à chauffage au combustible, avec au moins un échangeur de chaleur (6, 61, 62, 63, 64) pour le transfert de chaleur de l'énergie thermique des gaz d'échappement du brûleur (3) vers au moins un fluide liquide, avec un raccord de tuyau de gaz d'échappement (4) et avec au moins une évacuation de condensat (5) avec une entrée (7), dans laquelle le ou les échangeurs de chaleur (6, 61, 62, 63, 64) sont agencés, dans le cas d'un échangeur de chaleur (6, 61, 62, 63), dans une carrosserie (2) et, dans le cas de plusieurs échangeurs de chaleur (6, 61, 62, 63, 64), dans au moins une carrosserie (2, 18), dans laquelle l'entrée (7) dans au moins une évacuation de condensat (5) est agencée à une distance (a) au-dessus du point le plus bas d'au moins une carrosserie (2, 18) et dans laquelle une partie de l'échangeur de chaleur (6, 61, 63, 64) est agencée dans ou autour de la carrosserie (2, 18) au-dessous de l'entrée (7) dans l'évacuation de condensat (5), **caractérisée en ce qu'**un ou plusieurs corps déplaceurs (16, 17), qui arrivent de préférence à la hauteur de l'entrée (7) dans l'évacuation de condensat (5), sont agencés dans la carrosserie (2, 18) pour réduire la surface destinée à l'évaporation du condensat.

2. Cellule de chaleur (1) selon la revendication 1, **caractérisée en ce que** l'échangeur de chaleur (6, 61, 62, 64) est constitué au moins en partie d'un tuyau hélicoïdal qui est agencé de préférence avec un axe médian perpendiculaire dans la carrosserie (2).

3. Cellule de chaleur (1) selon la revendication 1 ou 2, **caractérisée en ce que** l'échangeur de chaleur (6, 63) est constitué au moins en partie d'une enveloppe cylindrique qui est agencée de préférence avec un axe médian perpendiculaire dans la carrosserie (2).

4. Cellule de chaleur (1) selon l'une des revendications 1 à 3, **caractérisée en ce que** l'évacuation de condensat (5) dépasse par l'intermédiaire d'un tuyau dans la carrosserie (2, 18).

5. Cellule de chaleur (1) selon l'une des revendications 1 à 4, **caractérisée en ce que** l'échangeur de chaleur (6, 61, 63, 64) dispose d'une entrée (8) au-dessous de l'entrée (7) dans l'évacuation de condensat (5) et **en ce que** cette entrée est reliée de préférence à une conduite d'entrée d'eau sanitaire.
